# EUROPEAN PATENT APPLICATION

(11) **EP 4 768 889 A1**
(43) Date of publication of application: **01.07.2026**
(21) Application number: 25217759.7
(22) Date of filing: 21.11.2025
(51) Int. Cl.: G01N 3/18, G01N 25/00, G01N 25/16

(54) **THERMOMECHANICAL ANALYSIS APPARATUS**

(30) Priority: 27.12.2024 JP 2024231993
(71) Applicant: Hitachi High-Tech Analysis Corporation, Tokyo 105-6411 (JP)
(72) Inventor: KOBAYASHI, Kengo, Minato-ku, Tokyo, 105-6411 (JP); OKANO, Yui, Minato-ku, Tokyo, 105-6411 (JP)
(74) Representative: Zimmermann, Tankred Klaus

(57) **Abstract**

A thermomechanical analysis apparatus with improved measurement accuracy is proposed. The thermomechanical analysis apparatus (1) includes a sample stage (15) where a sample (S) is placed, a sample tube (11) where the sample stage is placed, the sample tube being fixed to a measurement system, a probe (10) extending in an axial direction (L), one end of the probe (10) coming in direct or indirect contact with the sample (S) to apply a load to the sample (S) and a furnace (12a, 12b) configured to heat the sample, wherein a contact surface of the sample stage with the sample is provided with unevenness.

## Description

### BACKGROUND

### Technical Field

The present disclosure relates to a thermomechanical analysis apparatus that performs measurement of thermal behavior of a sample.

### Description of the Related Art

In the related art, as a method of evaluating the temperature characteristics of a sample, a method called thermal analysis that measures the thermal behavior (physical change) of the sample corresponding to temperature changes by heating a sample is used. Thermal analysis is defined in "General Rules for Thermal Analysis" in JIS K 0129:2005 and techniques of measuring physical properties of a measurement target (measurement sample) when the temperature of the sample is controlled by a program all can be regarded as thermal analysis. As general thermal analysis, there are five kinds of methods, (1) differential thermal analysis (TDA) that detects temperature (temperature difference), (2) differential scanning calorimetry (DSC) that measures heat flow difference, (3) thermogravimetry (TG) that detects mass (weight variation), (4) thermomechanical analysis (TMA) that detects mechanical properties, and (5) dynamic mechanical analysis (DMA).

Among these, thermomechanical analysis (TMA) applies a load to a sample through a probe and detects shape variation of the sample at that time as displacement of the probe (e.g., see Patent Documents 1 and 2). Accordingly, it is possible to measure the elastic modulus or expansion rate of the sample as a function of temperature or time.

Here, the thermomechanical analysis apparatus (TMA) is provided with a sample tube (reference tube) fixed to a measurement system, and a sample is placed directly on the sample tube or placed indirectly with a sample stage therebetween. Further, by bringing the probe into contact with the sample, a load is applied to the sample to perform various measurements.

This sample tube (reference tube) is usually formed in a cylindrical shape, and by pressing a sample with a probe while holding the sample inside or on top of it, expansion/compression or penetration measurement mode can be performed.

Further, as described in Patent Document 2, an opening 11k shown in FIG. 3 may be provided on the side of a sample tube 11, or a slit 11s may be formed on the bottom surface of the sample tube 11. Further, a chuck 4b is engaged in the slit 11s, and a film-shaped sample S2 may be clamped by chucks 4a and 4b to perform tensile measurement.

### (Prior Art Documents)

### (Patent Documents)

(Patent Document 1) Japanese Patent Publication No. 2909922
(Patent Document 2) Japanese Patent Publication No. 3370620

### SUMMARY

However, in the sample tubes (or sample stages placed on the sample tubes) of the related art, a contact surface with a sample has a flat shape and has no unevenness visible to the naked eye, so the entire bottom surface of a sample comes into contact the contact surface.

However, fine unevenness (surface roughness) that can be measured by a surface roughness tester but are not visible to the naked eye are on the surface of samples, and moreover, the surface flatness varies depending on samples, and even in the same sample, it cannot be considered uniform. Therefore, there was a problem in that the contact area between a sample tube or sample stage and a sample changes every time a measurement is performed, so there are variations in values of various measurements (e.g., linear expansion coefficient) in expansion/compression and penetration measurement modes.

The present disclosure has been made in an effort to solve the problems described above and an objective of the present disclosure is to provide a thermomechanical analysis apparatus with improved measurement accuracy.

In order to achieve the objectives, a thermomechanical analysis apparatus of a first aspect of the present disclosure includes: a sample stage where a sample is placed; a sample tube where the sample stage is placed, the sample tube being fixed to a measurement system; a probe extending in an axial direction, one end of the probe coming in direct or indirect contact with the sample to apply a load to the sample; and a furnace configured to heat the sample, wherein a contact surface of the sample stage with the sample is provided with unevenness.

Since a fine unevenness (surface roughness) that is not visible to the naked eye is present on the contact surface of the sample stage with a sample and the surface flatness is not uniform, the contact area between the sample stage and the sample varies each time a measurement is performed, so there are variations in measurement values in expansion/compression and penetration measurement modes.

Therefore, by forming an unevenness on the sample stage, the contact area between the sample and the sample stage is reduced. As a result, since the change in contact area due to the fine unevenness is also reduced, measurement accuracy is improved.

A thermomechanical analysis apparatus of a second aspect of the present disclosure includes: a sample tube where a sample is placed, the sample tube being fixed to a measurement system; a probe extending in an axial direction, one end of the probe coming in direct or indirect contact with the sample to apply a load to the sample; and a furnace configured to heat the sample, wherein a contact surface of the sample tube with the sample is provided with unevenness.

Since a fine unevenness (surface roughness) that is not visible to the naked eye is present on the contact surface of the sample tube with a sample and the surface flatness is not uniform, the contact area between the sample tube and the sample varies each time a measurement is performed, so there are variations in measurement values in expansion/compression and penetration measurement modes.

Therefore, by forming an unevenness on the sample tube, the contact area between the sample and the sample tube is reduced. As a result, since the change in contact area due to the fine unevenness is also reduced, measurement accuracy is improved.

In the thermomechanical analysis apparatus of the present disclosure, the unevenness may include a single protrusion protruding from the center of gravity of the contact surface of the sample stage or the sample tube, or a single recess recessed from the center of gravity of the contact surface of the sample stage or the sample tube.

In the thermomechanical analysis apparatus of the present disclosure, the unevenness may include a plurality of protrusions protruding from the contact surface of the sample stage or the sample tube, or a plurality of recesses recessed from the contact surface, and the protrusions may be of identical height.

In the thermomechanical analysis apparatus of the present disclosure, the protrusions or recesses may include three or more protrusions or recesses extending from a center of gravity of the contact surface toward an outer edge in a shape of a streak and each spaced apart in a circumferential direction.

According to the present disclosure, a thermomechanical analysis apparatus with improved measurement accuracy can be obtained.

### BRIEF DESCRIPTION OF THE DRAWINGS

FIG. 1 is a view illustrating the configuration of a thermomechanical analysis apparatus according to an embodiment of a first aspect of the present disclosure;
FIG. 2 is a perspective view illustrating a sample tube of the thermomechanical analysis apparatus according to the embodiment of the first aspect of the present disclosure;
FIG. 3 is a perspective view illustrating an example in which the sample tube is used for tensile measurement;
FIG. 4 is a perspective view illustrating a sample stage and a sample that is placed on the sample stage;
FIG. 5 is a perspective view illustrating a modified example of the sample stage;
FIG. 6 is a perspective view illustrating another modified example of the sample stage;
FIG. 7 is a perspective view illustrating the configuration of a thermomechanical analysis apparatus according to an embodiment of a second aspect of the present disclosure; and
FIG. 8 is a perspective view illustrating a modified example of the thermomechanical analysis apparatus according to the embodiment of the second aspect of the present disclosure.

### DETAILED DESCRIPTION

Hereinafter, embodiments of the present disclosure are described with reference to drawings.

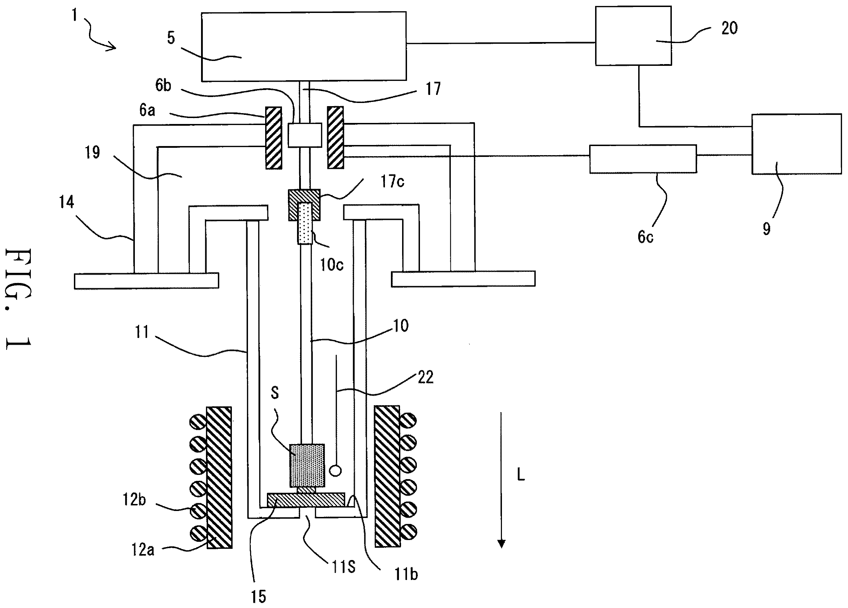

FIG. 1 is a view illustrating the configuration of a thermomechanical analysis apparatus 1 according to an embodiment of a first aspect of the present disclosure.

A thermomechanical analysis apparatus 1 includes a sample stage 15 where a sample S is placed, a sample tube 11 where the sample stage 15 is placed and that is fixed to a measurement system (frame 14), a rod-shaped probe 10 that extends in the axial direction L (vertical direction in FIG. 1), a load generator 5 that generates a load in the axial direction L of the probe 10, a load transfer shaft 17 that connects the load generator 5 and the probe 10, a displacement detector 6a, 6b that detects displacement in the axial direction L of the probe 10, and a furnace 12a, 12b for heating the sample S.

Each component of the thermomechanical analysis apparatus 1 is supported by the frame 14. Further, the cylindrical sample tube 11 (also referred to as a reference tube or sample holding member) with a bottom is moved downward from the frame 14 toward the sample S, and a columnar sample stage 15 is placed on the bottom surface 11b of the sample tube 11.

Further, in this embodiment, a first end (lower end) of the probe 10 is brought into direct contact with the upper end of the sample S placed on the sample stage 15 to apply a load to the sample S.

A thermocouple 22 for temperature measurement is additionally disposed in the vicinity of the sample S.

The load transfer shaft 17 has a rod shape extending in the axial direction L, and its upper end (first end) is fixed (connected) to the load generator 5, and a connection joint 17c is installed at its lower end (second end).

Though not shown, the load generator 5 includes a magnetic circuit composed of a coil and a permanent magnet surrounding the coil, and generates a load by being displaced in the axial direction L when current flows through the coil.

Meanwhile, a probe joint 10c is connected to a second end (upper end) of the probe 10 and the connection joint 17c is connected to the probe joint 10c to transmit a load from the load generator 5 to the probe 10.

Further, the probe 10 and the load transfer shaft 17 are coaxially connected.

Further, a core (magnetic material) 6b made of a conductive material is fixed on the outer surface of a portion of the load transfer shaft 17 between the connection joint 17c and the load generator 5 in the axial direction L, and a differential transformer (primary coil and secondary coil) 6a is disposed around the core 6b. Further, a detector 6c detects the voltage of the differential transformer 6a.

Further, when the position of the core 6b (furthermore, the probe 10) is changed with respect to the differential transformer 6a due to variation of the length of the sample S by thermal expansion when temperature is changed, a voltage is generated in the differential transformer 6a in response to the displacement, so the displacement of the core 6b (furthermore, the probe 10) in the axial direction L can be detected.

The differential transformer 6a and the core 6b constitute a "displacement detector".

A furnace composed of a furnace body 12a and a heater 12b disposed around the furnace body 12a is installed around the sample S and the temperature of the furnace is controlled by a predetermined controller.

A load signal generator 20 generates a load signal for operating the load generator 5. The load signal generator 20 is, for example, an electronic circuit equipped with various electronic parts or chips on a circuit board.

An analog signal is output to the load generator 5 from the load signal generator 20, whereby a predetermined load is generated.

The load generated by the load generator 5 is applied to the sample S through the load transfer shaft 17 and the probe 10.

Meanwhile, displacement of the sample S, etc. due to the load is transmitted to the core 6b through the probe 10 and the load transfer shaft 17 and is detected as a change of the position of the core 6b relative to the differential transformer 6a.

A displacement detection signal by the differential transformer 6a and the core 6b is sent to the detector 6c and is converted into a displacement signal.

The displacement signal that is the output from the detector 6c is sent to a calculator 9 and is combined with the load signal previously input to the load signal generator 20, whereby the physical quantity (mechanical properties) of the sample S is calculated.

Specifically, in this example, as thermomechanical analysis (TMA), a load is applied to the sample S by the probe 10 and the shape change (length change, etc.) of the sample S at that time is obtained as a physical quantity.

Further, the present disclosure targets various measurements in expansion/compression and penetration measurement modes (for example, linear thermal expansion coefficient, glass transition temperature, etc.) and does not target tensile measurement.

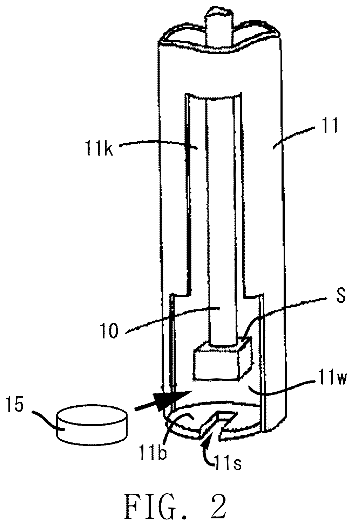

Here, as shown in FIG. 2, the sample tube 11 has a roughly cylindrical shape extending in the axial direction L and has an opening 11k on the front side of the lateral surface of the sample tube 11, and a slit 11s that is open in a rectangular shape is formed on the bottom surface 11b of the sample tube 11.

Further, the lateral surface 11w of the sample tube 11, excluding the opening 11k, surrounds the bottom surface 11b in an arc shape.

Further, a notch of the slit 11s is open on the side of the bottom surface 11b facing the opening 11k.

Further, the sample stage 15 is placed on the bottom surface 11b to cover the slit 11s.

Further, installation or replacement of the sample S is performed by opening the furnace, lowering the sample tube 11, and inserting or removing the sample S through the opening 11k. Thereafter, the sample tube 11 is moved to an appropriate position, depending on the length of the sample S in the axial direction L, the furnace is closed, and then measurement is performed.

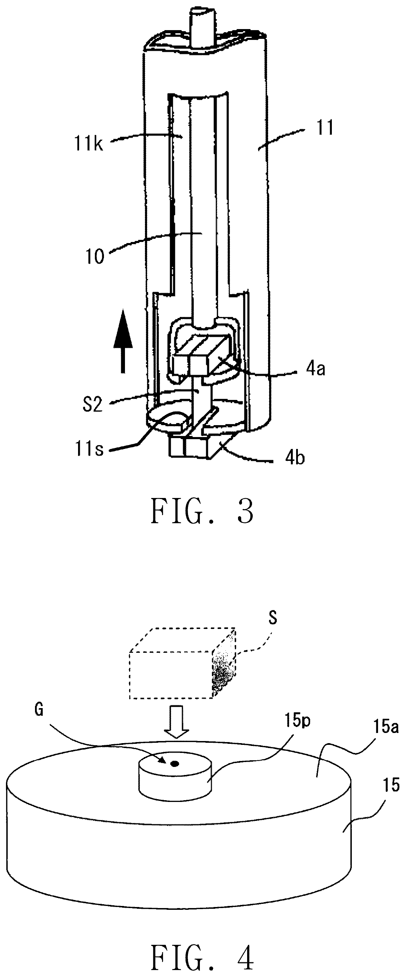

Meanwhile, as shown in FIG. 3, in this embodiment, the sample tube 11 can also be used for tensile measurement. However, as already mentioned, the present disclosure does not target tensile measurement.

Next, features of the first aspect of the present disclosure are described.

As shown in FIG. 4, in the thermomechanical analysis apparatus 1 according to the first aspect of the present disclosure, a protrusion 15p is formed on a contact surface (upper surface) 15a with the sample S on the sample stage 15. Here, in the example of FIG. 4, the protrusion 15p is formed as a single columnar protrusion protruding from the center of gravity G of the contact surface 15a.

By forming the protrusion 15p on the sample stage 15 as described above (further, by setting the upper surface area of the protrusion 15p to be smaller than the bottom surface area of the sample S), even if fine unevenness (surface roughness) not visible to the naked eye are present on the bottom surface of the sample S itself, the contact area between the sample S and the sample stage 15 is reduced compared to the related art. As a result, since variation in the contact area caused by the fine unevenness described above is also reduced, the measurement accuracy of various measurements (e.g., linear thermal expansion coefficient) in expansion/compression and penetration measurement modes is improved.

The diameter of the protrusion 15p also varies depending on the size of the sample S, and approximately 3.0 mm is preferable.

Further, when the same material is used for the sample stage 15, the sample tube 11, and the probe 10, measurement errors are minimized, so this is preferable. The material of the sample stage 15, the sample tube 11, and the probe 10 may include, for example, quartz glass or alumina.

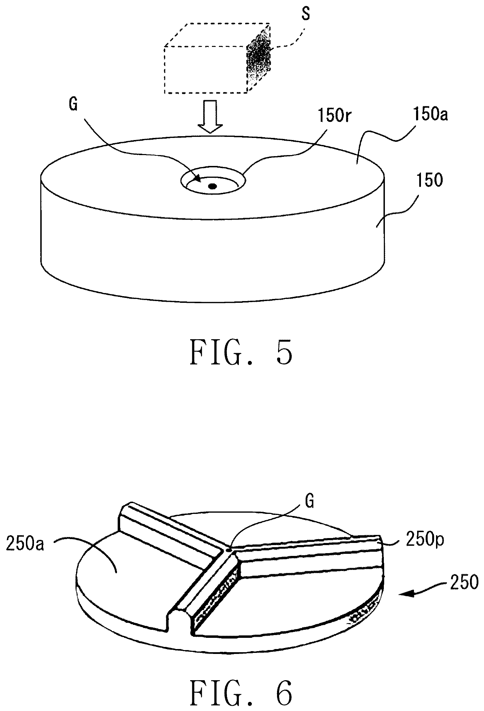

FIG. 5 illustrates a modified example of the sample stage 150. A recess 150r is formed on a contact surface (upper surface) 150a of the sample stage 150 for contact with the sample S. Here, in the example of FIG. 5, the recess 150r is formed as a single columnar recess recessed from the center of gravity G of the contact surface 150a.

Similarly, in the sample stage 150, by forming a recess 150r in the sample stage 150, the contact area between the sample S and the sample stage 150 is reduced compared to the related art.

As a result, the measurement accuracy of various measurements (e.g., linear thermal expansion coefficient) in expansion/compression and penetration measurement modes is improved.

Meanwhile, the dimensions of the recess 150r only need to be such that the sample S does not fall into the recess 150r. For example, the maximum diameter of the recess 150r (which may be an equivalent circular diameter) only needs to be smaller than the maximum diameter of the sample S (which may also be an equivalent circular diameter). When the recess 150r is long and narrow, it only needs to be smaller than the maximum width of the sample S in the direction perpendicular to the extension direction of the recess 150r, instead of the maximum diameter.

FIG. 6 illustrates another modified example of the sample stage 250. Three protrusions 250p extending from the center of gravity G of the contact surface 250a toward the outer edge in a shape of a streak and each spaced apart in the circumferential direction are formed on the contact surface (upper surface) 250a of the sample stage 250 for contact with the sample S, and the protrusions 250p have the same height. The protrusions 250p meet each other at the center of gravity G and are arranged at equal intervals in the circumferential direction.

Similarly, by forming protrusions 250p on the sample stage 250 and setting the total area of the upper surfaces of the protrusions 250p to be smaller than the bottom surface area of the sample S, the contact area between the sample S and the sample stage 250 is reduced compared to the related art.

As a result, the measurement accuracy of various measurements (e.g., linear thermal expansion coefficient) in expansion/compression and penetration measurement modes is improved.

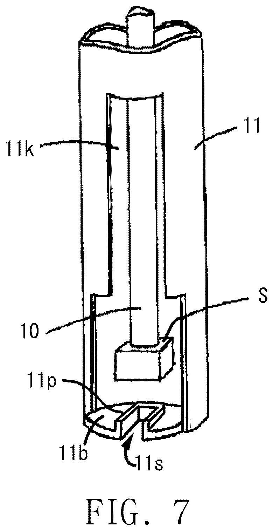

Next, with reference to FIG. 7, a thermomechanical analysis apparatus according to a second aspect of the present disclosure is described. The thermomechanical analysis apparatus according to the second aspect is identical to the thermomechanical analysis apparatus according to the first aspect, except that the sample stage 15 is omitted and unevenness are directly formed on the sample tube 11. Therefore, descriptions of other configurations are omitted.

As shown in FIG. 7, on the bottom surface 11b of the sample tube 11 (a contact surface of the sample tube 11 with the sample S), a bracket-shaped (angular U-shaped) protrusion 11p is formed to extend upward from the outer peripheral edge of the slit 11s. Further, in this example, the sample S can be placed on the protrusion 11p.

Thus, in the thermomechanical analysis apparatus according to the second aspect, by forming the protrusion 11p on the bottom surface 11b of the sample tube 11 (further, by setting the upper surface area of the protrusion 11p to be smaller than the bottom surface area of the sample S), even if fine unevenness (surface roughness) not visible to the naked eye are present on the bottom surface of the sample S itself, the contact area between the sample S and the sample tube 11 is reduced compared to the related art.

As a result, since variation in the contact area caused by the fine unevenness described above is also reduced, the measurement accuracy of various measurements (e.g., linear thermal expansion coefficient) in expansion/compression and penetration measurement modes is improved.

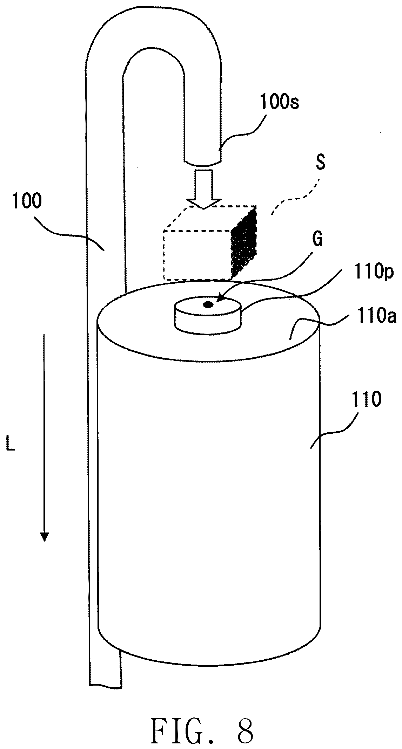

FIG. 8 illustrates a modified example of the thermomechanical analysis apparatus according to the embodiment of the second aspect of the present disclosure. Meanwhile, the thermomechanical analysis apparatus of FIG. 8 is identical to the thermomechanical analysis apparatus 1 of FIG. 7 except for the configuration of the sample tube 110 and the probe 100. Therefore, descriptions of other configurations are omitted.

As shown in FIG. 8, the sample tube 110 has a cylindrical shape and is configured such that a sample S is placed on the surface of the upper end (upward surface) 110a thereof.

Meanwhile, the probe 100 has an overall rod shape extending in the axial direction L (vertical direction in FIG. 1), and a first end (upper end) thereof is bent downward in a U-shape. Further, the load generator is installed below the probe 100, and when the probe 100 is pressed downward by the load generator, the upper end 100s of the U-shaped bent probe 100 applies a downward load to the sample S.

Here, on the upward surface (contact surface with the sample) 110a of the sample tube 110, a protrusion 110p is formed. Here, the protrusion 110p is formed as a single columnar protrusion protruding from the center of gravity G of the contact surface 110a.

As described above, by providing a protrusion 110p on the sample tube 110 as well (further, setting the upper surface area of the protrusion 110p to be smaller than the bottom surface area of the sample S), the contact area between the sample S and the sample tube 110 is reduced compared to the related art.

As a result, the measurement accuracy of various measurements (e.g., linear thermal expansion coefficient) in expansion/compression and penetration measurement modes is improved.

The present disclosure is not limited to the embodiments described above.

For example, the shape, etc. of the sample stage or the sample tube are not limited.

Further, the number, shape, etc. of unevenness formed on the sample stage or the sample tube are not limited, and as long as the total upper surface area of these unevenness is set to be smaller than the bottom surface area of a sample, it is acceptable to use a plurality of protrusions or recesses.

The shape of each unevenness, when viewed from above, may be, for example, circular, polygonal, or irregular. As shown in FIG. 6, the number of protrusions or recesses extending from the center of the contact surface toward the outer edge in a shape of a streak is not limited if there are three or more, and it is preferable that they are arranged at equal intervals in the circumferential direction, but they do not necessarily have to be equally spaced. The shape of each protrusion or recess extending in a shape of streak does not necessarily have to be the same.

Protrusions or recesses of different shapes may coexist, and for example, a single protrusion may be formed at the center of the contact surface, while an arc-shaped protrusion for preventing a sample from tipping over and supporting it may also be provided on the outer peripheral side of the contact surface.

### [Description of Reference Numerals]

1: thermomechanical analysis apparatus
10, 100: probe
11, 110: sample tube
11b, 110a: contact surface of sample tube with sample
12a, 12b: furnace
15, 150, 250: sample stage
15a, 150a, 250a: contact surface of sample stage with sample
11p, 15p, 110p, 250p: protrusion (unevenness)
150r: recess (unevenness)
S: sample
L: axial direction
G: center of gravity

## Claims

1. A thermomechanical analysis apparatus (1) comprising:
a sample stage (15) where a sample (S) is placed;
a sample tube (11) where the sample stage (15) is placed, the sample tube (11) being fixed to a measurement system;
a probe (10) extending in an axial direction (L), one end of the probe (10) coming in direct or indirect contact with the sample (S) to apply a load to the sample (S); and
a furnace (12a, 12b) configured to heat the sample (S),
**characterized in that** a contact surface of the sample stage (15) with the sample (S) is provided with unevenness.

2. A thermomechanical analysis apparatus (1) comprising:
a sample tube (11) where a sample (S) is placed, the sample tube (11) being secured to a measurement system;
a probe (10) extending in an axial direction (L), one end of the probe (10) coming in direct or indirect contact with the sample (S) to apply a load to the sample (S); and
a furnace (12a, 12b) configured to heat the sample (S),
**characterized in that** a contact surface of the sample tube (11) with the sample (S) is provided with unevenness.

3. The thermomechanical analysis apparatus (1) according to claim 1, wherein the unevenness includes a single protrusion (15p) protruding from a center of gravity (G) of the contact surface of the sample stage (15), or the unevenness includes a single recess (150r) recessed from the center of gravity (G) of the contact surface of the sample stage (15).

4. The thermomechanical analysis apparatus according to claim 2, wherein the unevenness includes a single protrusion (11p) protruding from a center of gravity (G) of the contact surface of the sample tube (11), or the unevenness includes a single recess recessed from the center of gravity (G) of the contact surface of the sample tube (11).

5. The thermomechanical analysis apparatus (1) according to claim 1, wherein the unevenness includes a plurality of protrusions protruding from the contact surface of the sample stage, or the unevenness includes a plurality of recesses recessed from the contact surface of the sample stage, and the protrusions are of identical height.

6. The thermomechanical analysis apparatus (1) according to claim 2, wherein the unevenness includes a plurality of protrusions protruding from the contact surface of the sample tube (11), or the unevenness includes a plurality of recesses recessed from the contact surface of the sample tube (11) and the protrusions are of identical height.

7. The thermomechanical analysis apparatus (1) according to claim 5, wherein the protrusions or recesses include three or more protrusions or recesses extending from a center of gravity (G) of the contact surface toward an outer edge in a shape of a streak and each spaced apart in a circumferential direction.

8. The thermomechanical analysis apparatus (1) according to claim 6, wherein the protrusions or recesses include three or more protrusions or recesses extending from a center of gravity (G) of the contact surface toward an outer edge in a shape of a streak and each spaced apart in a circumferential direction.
